# FASCICULE DE BREVET EUROPEEN

(11) **EP 2 082 217 B1**
(45) Date de publication et mention de la délivrance du brevet: **14.10.2020**
(21) Numéro de dépôt: 07858658.3
(22) Date de dépôt: 24.10.2007
(51) Int. Cl.: G01N 21/90, G01N 21/88

(54) **INSTALLATION COMPORTANT UN POSTE D'INSPECTION OPTIQUE POUR DETECTER DES DEFAUTS REFLECHISSANT LA LUMIERE**
INSTALLATION MIT OPTISCHER INSPEKTIONSSTATION ZUM NACHWEIS VON LICHTREFLEXIONSDEFEKTEN
INSTALLATION COMPRISING AN OPTICAL INSPECTION STATION FOR DETECTING LIGHT-REFLECTING DEFECTS

(30) Priorité: 24.10.2006 FR 0654490
(43) Date de publication de la demande: 29.07.2009
(73) Titulaire: HCV 2, 69390 Vourles (FR)
(72) Inventeur: GARIN, Jean-François, 69008 Lyon (FR)
(74) Mandataire: Cabinet Beau de Loménie
(86) Numéro de dépôt international: PCT/FR2007/052239
(87) Numéro de publication internationale: WO 2008/050067

(56) Documents cités:
- EP-A- 0 060 918
- EP-A1- 0 961 113
- EP-A1- 1 147 405
- DE-A1- 10 140 009
- DE-U1- 29 502 708
- FR-A- 1 445 144
- JP-A- 61 025 041
- JP-A- 2002 267 611
- US-A1- 2004 247 193
- US-B1- 6 211 952
- US-B1- 7 148 961

## Description

La présente invention concerne le domaine technique de l'inspection d'objets ou d'articles creux translucides ou transparents tels que des bouteilles, des pots ou des flacons, en vue de déceler d'éventuels défauts présentés par l'objet et possédant la caractéristique de réfléchir la lumière.

L'objet de l'invention vise plus particulièrement le domaine de l'inspection d'objets entraînés en rotation en vue de détecter en tant que défauts, les glaçures en exploitant leur caractéristique essentielle qui est celle de réfléchir la lumière incidente.

Les défauts de type glaçures sont des microfissures présentes dans la matière et qui sont des amorces pour la propagation de fissures pouvant conduire à la destruction de l'objet par exemple lors d'un choc mécanique ou thermique. Les glaçures sont généralement soit sensiblement verticales, c'est-à-dire sensiblement parallèles à l'axe de symétrie longitudinale de l'objet, soit sensiblement horizontales, c'est-à-dire s'étendant dans un plan sensiblement perpendiculaire audit axe de symétrie. Compte tenu du fait que de tels défauts sont susceptibles d'affecter les caractéristiques des objets et plus grave, de présenter un réel danger pour l'utilisateur, l'état de la technique a proposé de nombreuses solutions pour détecter les glaçures.

Par exemple, la demande de brevet EP 0 456 910 décrit un dispositif assurant l'inspection d'articles creux destinés à être mis en rotation autour de leur axe de symétrie longitudinale. Un système d'éclairage est apte à fournir un faisceau lumineux incident concentré par une lentille sur la partie supérieure de la bague de l'objet. Un système de réception telle qu'une caméra matricielle reçoit les faisceaux lumineux réfléchis notamment par des glaçures verticales lors de la rotation de l'article. La caméra est reliée à une unité de traitement indiquant si les faisceaux réfléchis dépassent un seuil d'intensité lumineuse prédéterminée au-delà duquel un défaut est constaté.

La demande de brevet EP 0 483 966 propose de mettre en œuvre un dispositif comportant une source lumineuse éclairant le fond d'une bouteille placée sur un support entraîné en rotation. Une caméra prend des images du fond de la bouteille à travers une fenêtre de scrutation aménagée dans le support de la bouteille. La caméra est reliée à une unité d'analyse et de traitement des faisceaux lumineux reçus, adaptée pour former selon une cadence donnée, des images successives de la bouteille formées chacune d'un nombre déterminé de pixels. L'unité d'analyse et de traitement effectue ensuite après une resynchronisation des deux images successives, une différence entre les pixels des deux images précitées et un comptage par rapport à des valeurs de seuils de façon à permettre de distinguer les faisceaux réfléchis de nature stationnaire correspondant à des réflections parasites, de ceux de nature variable correspondant à des défauts de l'objet.

Le brevet EP 1 147 405 décrit un dispositif d'inspection de bouteilles comportant au moins cinq têtes de prise de vues choisies parmi le groupe constitué d'extrémités d'endoscope de prise d'images et des capteurs d'images déportés par rapport à un dispositif de traitement d'images. Un tel dispositif vise ainsi à multiplier les têtes de prise de vues de manière à augmenter le nombre d'images prises au cours de la rotation de la bouteille. Un tel dispositif constitue une solution particulièrement onéreuse compte tenu du nombre important de têtes de prise de vues. Par ailleurs, il s'avère en principe difficile d'installer autant de capteurs sur une machine de fabrication d'objets en verre.

Dans le domaine technique de l'inspection optique de bouteilles, il est également connu de mettre en œuvre des éléments optiques de type lentilles de Fresnel (JP 61 025 041), miroir cylindrique (JP 2002 267 611) ou miroir tubulaire (EP 0 060 918) afin d'observer simultanément plusieurs portions de l'objet depuis un unique point de vue. De tels systèmes ne sont pas adaptés pour détecter de manière fiable et sûre les glaçures.

Le Document US-6.211.952 décrit un dispositif d'inspection de récipients ayant un seul système d'éclairage et formant une image comportant des vues superposées du goulot d'un récipient. Le document EP-0.961.113 décrit un dispositif d'inspection de récipients ayant une source d'illumination de type faisceau et une autre source d'illumination qui est de type diffus. Il prévoit une activation séquentielle de chaque moyen d'illumination et la formation d'images dont chacune ne contient donc qu'une seule vue, et un seul angle de visée.
Le document FR-1.445.144 décrit un dispositif d'inspection de récipients ayant plusieurs photocellules délivrant des signaux qui, après pré-amplification et redressement, sont fusionnés à l'entrée d'un relai 23.
Les documents US-2004/0247193, DE-295.02.708 et DE-101.40.009 décrivent d'autres dispositifs d'inspection.

La présente invention vise donc à remédier aux inconvénients de l'état de la technique en proposant une installation comportant un poste d'inspection optique pour détecter des défauts réfléchissant la lumière et présentés par un objet creux transparent ou translucide entraîné en rotation, un tel poste permettant de détecter de manière fiable et sûre les glaçures tout en limitant le nombre de caméras installées. Pour atteindre un tel objectif, l'installation est telle que définie à la revendication 1. Selon un exemple de réalisation, les éléments optiques de déviation sont disposés de part et d'autre de l'axe de visée optique de la caméra matricielle.

Avantageusement, les éléments optiques de déviation sont disposés de manière symétrique par rapport à l'axe de visée optique de la caméra matricielle.

Dans le cas où plusieurs éléments optiques de déviation sont disposés d'un même côté de l'axe de visée optique de la caméra matricielle, ces éléments optiques de déviation possèdent des angles de déviation optique différents eux.

Par exemple, les éléments optiques de déviation sont réalisés par des lentilles sphériques, des lentilles cylindriques, des prismes ou par des miroirs.

Selon une variante préférée de réalisation, les éléments optiques de déviation sont réalisés par des prismes de Fresnel ou des lentilles de Fresnel.

Selon un autre exemple de réalisation, le système d'éclairage et les éléments optiques de déviation sont disposés de part et d'autre de l'objet.

Bien entendu, il peut être envisagé que le poste d'inspection optique comporte à la fois des éléments optique de déviation disposés côte à côte selon une direction horizontale afin de détecter les glaçures verticales et des éléments optiques de déviation disposés de manière superposée selon une direction verticale afin de détecter les glaçures horizontales. Selon cet exemple, le poste d'inspection optique comporte une caméra associée à un objectif adapté pour détecter des glaçures horizontales et des glaçures verticales.

Selon une caractéristique avantageuse, l'unité d'analyse et de traitement des images assure une comparaison entre les informations extraites des vues des images prises de manière à distinguer les faisceaux réfléchis de nature stationnaire de ceux de nature mobile correspondant à des défauts de l'objet.

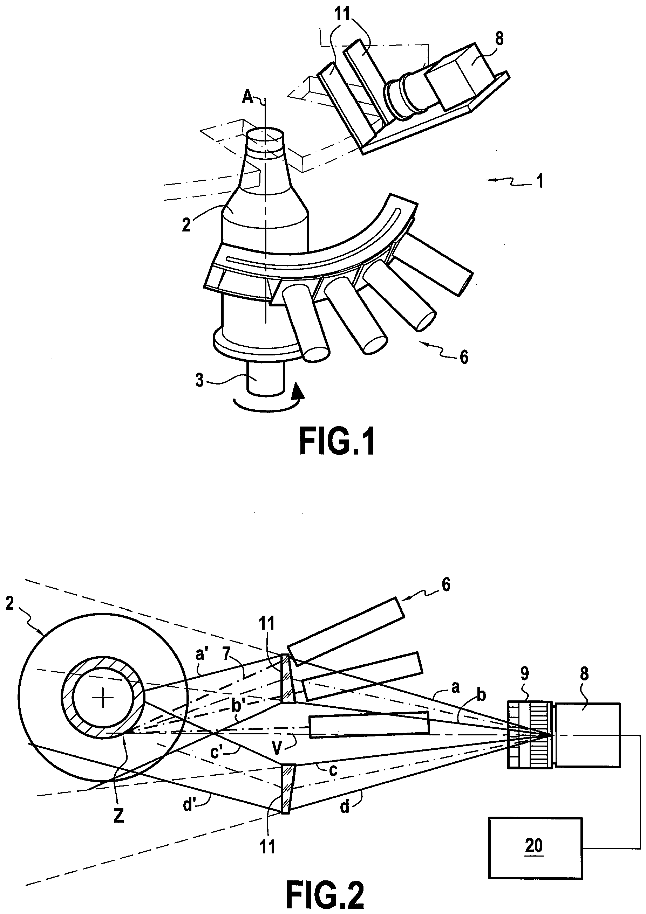

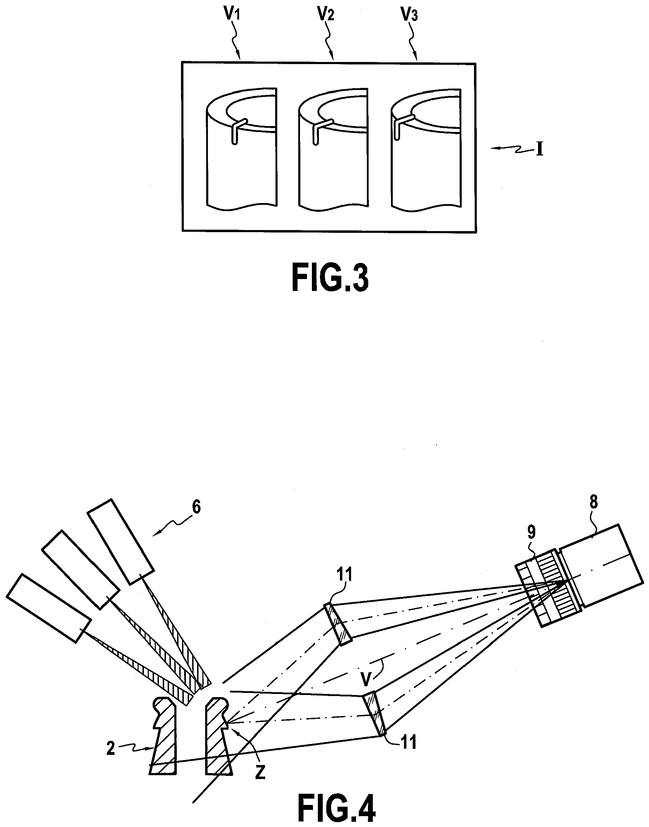

Diverses autres caractéristiques ressortent de la description faite ci-dessous en référence aux dessins annexés qui montrent, à titre d'exemples non limitatifs, des formes de réalisation de l'objet de l'invention.
**La** **Figure 1** est une vue schématique en perspective montrant un poste d'inspection optique.
**La** **Figure 2** est une vue de dessus du poste d'inspection illustré à la **Fig 1****.**
**La** **Figure 3** illustre un exemple d'image prise par un poste d'inspection optique conforme à l'invention.
**La** **Figure 4** est une vue d'un exemple de réalisation d'un poste d'inspection optique pour la détection des glaçures horizontales.

L'objet de l'invention concerne une installation comportant un poste d'inspection optique **1** pour détecter des défauts réfléchissant la lumière et présentés par des objets creux **2** transparents ou translucides. Les objets **2** sont des bouteilles, des pots ou des flacons présentant un axe de symétrie longitudinale **A** et réalisés en verre. Le poste d'inspection optique **1** est destiné à être installé sur une ligne de fabrication des objets **2** en vue de détecter d'éventuels défauts présentés par les parois de ces objets. Le poste d'inspection optique **1** est apte à détecter en tant que défauts, des glaçures, susceptibles d'apparaître au niveau d'une zone prédéterminée d'inspection ou de contrôle **Z.** De manière classique, les objets **2** sont pris en charge par un système de manipulation appropriée **3** permettant d'assurer la rotation des objets **2** autour de leur axe de symétrie **A.**

Le poste d'inspection **1** comporte un système d'éclairage **6** apte à fournir une série de faisceaux lumineux **7** éclairant la zone d'inspection **Z** de l'objet selon différents angles incidents. Il doit être compris que la zone d'inspection **Z** correspond à une surface limitée de l'objet qui dans l'exemple illustré correspond à une partie de la bague de l'objet. Par exemple, le système d'éclairage **6** comporte plusieurs sources lumineuses telles que des diodes électroluminescentes ou une autre source de lumière associée par exemple à des fibres optiques et/ou des lentilles. Ce système d'éclairage **6** est adapté pour éclairer la zone d'inspection **Z** avec des angles d'incidences différents. La rotation de l'objet **2** sur un tour selon l'axe de symétrie **A** permet d'obtenir une inspection de toute la périphérie de l'objet à savoir la bague dans l'exemple considéré.

Le poste d'inspection optique **1** comporte une caméra **8** équipée d'un objectif **9** réalisant des images de la zone d'inspection **Z** au cours de la rotation de l'objet **2.** La caméra **8** est une caméra matricielle.

Conformément à l'invention, le poste d'inspection optique **1** comporte une série d'éléments optiques **11** de déviation dans l'air des rayons réfléchis par la zone d'inspection **Z.** Ces éléments optiques de déviation **11** sont disposés entre la zone d'inspection **Z** et l'objectif **9** de manière à former une image **I** de la zone d'inspection **Z,** cette image **I** comportant une série de vues de cette zone prises selon des angles de vues différentes. Ces éléments optiques de déviation **11** sont placés pour dévier dans l'air les rayons lumineux en direction de l'objectif **9.** Ces éléments optiques de déviation **11** peuvent être réalisés par des lentilles sphériques, des lentilles cylindriques, des prismes ou des miroirs. Selon une caractéristique préférée de réalisation, les éléments optiques de déviation **11** sont réalisés par des lentilles de Fresnel ou par des prismes de Fresnel. Aux **Fig. 1** et **2****,** les éléments optiques de déviation **11** sont réalisés par des prismes au nombre de **2.** Dans cet exemple, les éléments optiques de déviation **11** sont disposés de part et d'autre de l'axe de visée optique **V** de la caméra **8.** Selon une caractéristique préférée de réalisation, les éléments optiques de déviation **11** sont disposés de manière symétrique par rapport à l'axe de visée optique **V** de la caméra.

Tel que cela ressort clairement de l'exemple illustré aux **Fig. 2** et **3****,** les éléments optiques de déviation **11** sont disposés de manière à former une image **I** avec trois vues **V₁, V₂, V₃** de la zone d'inspection **Z.** L'angle de champ **a-d** de l'objectif **9** et de la caméra **8** est partagé en différentes zones à savoir trois zones dans l'exemple. Chaque zone correspond à une vue de l'objet prise sous un angle différent. La zone d'inspection **Z** est ainsi observée sous trois directions d'observation différentes à savoir :
- **a-b ; a'-b'** sur le trajet de laquelle est placé un élément optique de déviation **11** permettant de former une vue **V₁,**
- **c-d ; c'-d'** sur le trajet de laquelle est placé un élément optique de déviation **11** permettant de former une vue **V₃,**
- **b-c** laissée libre par les éléments optiques de déviation **11** autour de l'axe de visée **V** permettant à la caméra de conserver une vue directe pour former une vue **V₂**.

Il doit être considéré que chaque élément optique de déviation **11** permet de prendre la zone d'inspection **Z** sous un angle de visée distinct en vue de réaliser les vues **V₁**, **V₂** tandis que l'angle de visée de la caméra permet de réaliser une vue **V₃** de la zone d'inspection **Z** de sorte qu'il peut être obtenu une image I composée de trois vues **V₁, V₂**, **V₃** de la zone d'inspection **Z** prises sous trois angles de visée distincts.

Une telle disposition permet d'augmenter la probabilité de récupérer la lumière émise par un défaut réfléchissant la lumière, par l'observation de la zone d'inspection, sous différents angles de vues.

Dans l'exemple illustré, les éléments optiques de déviation **11** sont réalisés par deux prismes. Il est à noter que ces prismes peuvent être remplacés par des lentilles de Fresnel ou par des miroirs. Dans ce dernier exemple de réalisation, la caméra est disposée de l'autre côté de l'objet pour récupérer les rayons lumineux. De même, dans l'exemple illustré, les deux éléments optiques de déviation **11** laissent subsister entre eux un champ d'observation pour la caméra. Il peut être envisagé de partager le champ **a-d** en deux zones d'observation jointives à travers les deux éléments optiques de déviation **11** accolés de manière à obtenir une image **I** à deux vues **V₁** et **V₃** uniquement.

Bien entendu, il peut être envisagé de mettre en oeuvre un nombre supérieur d'éléments optiques de déviation. Par exemple, il peut être prévu de disposer quatre éléments optiques de déviation **11** montés de manière symétrique par rapport à l'axe de visée optique **V** de la caméra. Dans ce cas, les deux éléments optiques de déviation **11** disposés d'un même côté de l'axe de visée optique **V** possède des angles de déviation optique différents entre eux. Selon cette variante, chaque image prise **I** comporte cinq vues de la zone d'inspection **Z,** prises sous cinq angles de visée différents.

La caméra **8** est reliée à une unité **20** d'analyse et de traitement des images prises au cours de la rotation de l'objet. Il doit être considéré qu'au cours de la rotation de l'objet sur un tour, la caméra **8** prend une succession d'images **I** comportant chacune une série de vues de la zone d'inspection **Z** prises selon des axes de visée différents. Cette unité **20** assure une comparaison entre les informations extraites des vues des images prises successivement de manière à distinguer les faisceaux réfléchis de nature stationnaire de ceux de nature mobile correspondant à des défauts de l'objet.

Sur les **Fig. 1** et **2****,** les éléments optiques de déviation **11** et le système d'éclairage **6** sont disposés du même côté par rapport à l'objet **2.** De plus, les éléments optiques de déviation **11** sont situés côte à côte selon une direction horizontale afin de détecter avantageusement les glaçures verticales. Par ailleurs, il peut être prévu d'équiper une installation de contrôle des objets par un ou plusieurs postes d'inspection **1** conformes à l'invention. Il est à noter qu'il peut être envisagé de contrôler par deux postes d'inspection optique **1,** deux zones d'inspection **Z** situées de manière diamétralement opposée sur l'objet **2.** La **Fig. 4** illustre une réalisation du poste d'inspection **1** conforme à l'invention, adapté plus précisément pour détecter les glaçures horizontales. Selon cette réalisation, le système d'éclairage **6** et les éléments optiques de déviation **11** sont disposés de part et d'autre de l'objet **2.** De plus, les éléments optiques de déviation **11** sont disposés de manière superposée selon une direction sensiblement verticale. Selon cette variante, les éléments optiques de déviation **11** sont tournés d'un angle de 90° par rapport aux éléments optiques de déviation **11** illustrés à la **Fig. 1** **.**

Bien entendu, il peut être envisagé de réaliser un poste d'inspection **1** adapté pour détecter à la fois les glaçures horizontales et les glaçures verticales. A cet égard, le poste d'inspection **1** comporte des éléments optiques de déviation **11** disposés côte à côte selon une direction horizontale afin de détecter les glaçures verticales et des éléments optiques de déviation **11** disposés de manière superposée selon une direction verticale afin de détecter les glaçures horizontales. L'angle de champ de l'objectif et de la caméra est donc partagé en au moins autant de zones que d'éléments optiques de déviation **11** interposés sur le trajet de la lumière réfléchie.

L'invention n'est pas limitée aux exemples décrits et représentés car diverses modifications peuvent y être apportées sans sortir de son cadre qui est défini par les revendications annexées.

## Revendications

1. Installation pour contrôler des objets creux transparents ou translucides (**2**), comportant des moyens (**3**) de mise en rotation des objets et au moins un poste d'inspection optique (**1**) pour détecter, en tant que défauts, des glaçures réfléchissant la lumière et présentées par un objet creux (**2**) transparent ou translucide entrainé en rotation autour de son axe de symétrie (A) par les moyens de mise en rotation, l'objet (**2**) étant une bouteille, un pot ou un flacon présentant un axe de symétrie longitudinale (**A**) et réalisé en verre, le poste d'inspection optique (**1**) comprenant :
- un système d'éclairage (**6**) apte à fournir une série de faisceaux lumineux éclairant une zone d'inspection (**Z**) de l'objet (**2**) selon différents angles incidents,
- une caméra matricielle (**8**) équipée d'un objectif (**9**) réalisant des images de la zone d'inspection (**Z**) au cours de la rotation de l'objet (**2**),
- et une unité d'analyse et de traitement des images prises par la caméra matricielle (**8**) afin de détecter la présence de défauts réfléchissants dans les images,
**caractérisée en ce que** le poste d'inspection optique (**1**) comporte une série d'éléments optiques (**11**) de déviation dans l'air des rayons réfléchis par la zone d'inspection (**Z**), disposés entre la zone d'inspection (**Z**) et l'objectif (**9**), de manière à former dans chaque image, une série de vues de la zone d'inspection (**Z**) prises sous des angles de visée différents, l'angle de champ de l'objectif et de la caméra matricielle (**8**) étant partagé en différentes zones, chaque zone correspondant à une vue,
**en ce que** les moyens (**3**) de mise en rotation permettent d'assurer la rotation des objets (**2**) autour de leur axe de symétrie longitudinale (**A**), vertical,
et **en ce que** la série d'éléments optiques (**11**) de déviation comporte des éléments optiques de déviation (**11**) disposés de manière superposée selon une direction verticale afin de détecter les glaçures horizontales.

2. Installation selon la revendication **1**, **caractérisée en ce que** les éléments optiques de déviation (**11**) sont disposés de part et d'autre de l'axe de visée optique (**V**) de la caméra matricielle (**8**).

3. Installation selon la revendication **1** ou **2, caractérisée en ce que** les éléments optiques de déviation (**11**) sont disposés de manière symétrique par rapport à l'axe de visée optique (**V**) de la caméra matricielle (**8**).

4. Installation selon l'une des revendications **1** à **3, caractérisée en ce que** les éléments optiques de déviation (**11**) disposés d'un même côté de l'axe de visée optique (**V**) de la caméra matricielle (**8**) possèdent des angles de déviation optique différents entre eux.

5. Installation selon l'une des revendications **1** à **4, caractérisée en ce que** les éléments optiques de déviation (**11**) sont réalisés par des lentilles sphériques, des lentilles cylindriques, des prismes ou par des miroirs.

6. Installation selon la revendication **5,** caractérisée **caractérisé en ce que** les éléments optiques de déviation (**11**) sont réalisés par des prismes de Fresnel ou des lentilles de Fresnel.

7. Installation selon l'une des revendications **1** à **6, caractérisée en ce que** le système d'éclairage (**6**) et les éléments optiques de déviation (**11**) sont disposés de part et d'autre de l'objet (**2**).

8. Installation selon la revendication **1, caractérisée en ce que** l'unité (**20**) d'analyse et de traitement des images assure une comparaison entre les informations extraites des vues des images prises de manière à distinguer les faisceaux réfléchis de nature stationnaire de ceux de nature mobile correspondant à des défauts de l'objet (**2**).

9. Installation selon l'une des revendications précédentes, **caractérisée en ce que** le poste d'inspection optique (**1**) est adapté pour détecter à la fois les glaçures horizontales et les glaçures verticales et comporte des éléments optiques de déviation (**11**) disposés côte à côte selon une direction horizontale afin de détecter les glaçures verticales et des éléments optiques de déviation (**11**) disposés de manière superposée selon une direction verticale afin de détecter les glaçures horizontales.

## Patentansprüche

1. Einrichtung zum Prüfen von transparenten oder lichtdurchlässigen Hohlobjekten (2), die Mittel (3) zur Drehung von Objekten und mindestens eine Station zur optischen Inspektion (1) beinhaltet, um Rissen als Fehler zu erfassen, die Licht reflektieren und bei einem transparenten oder lichtdurchlässigen Hohlobjekt (2) vorhanden sind, das um seine Symmetrieachse (A) durch die Mittel zur Drehung drehend angetrieben wird, wobei das Objekt (2) eine Flasche, ein Becher oder ein Behälter ist, die/der eine längliche Symmetrieachse (A) aufweist und aus Glas hergestellt ist, wobei die Station zur optischen Inspektion (1) umfasst:
- ein Beleuchtungssystem (6), das dazu geeignet ist, eine Reihe von Lichtstrahlen bereitzustellen, die einen Inspektionsbereich (Z) des Objekts (2) aus unterschiedlichen Einfallswinkeln beleuchten,
- eine Matrixkamera (8), die mit einem Objektiv (9) ausgestattet ist, das im Verlauf der Drehung des Objekts (2) Bilder des Inspektionsbereichs (Z) aufnimmt,
- und eine Einheit zur Analyse und Verarbeitung von Bildern, die von der Matrixkamera (8) aufgenommen werden, um das Vorhandensein von reflektierenden Fehlern auf den Bildern zu erfassen,
**dadurch gekennzeichnet, dass** die Station zur optischen Inspektion (1) eine Reihe von optischen Elementen (11) zur Ablenkung von durch den Inspektionsbereich (Z) reflektierten Strahlen in der Luft aufweist, die wobei die Elemente zwischen dem Inspektionsbereich (Z) und dem Objektiv (9) angeordnet sind, um auf jedem Bild eine Reihe von Ansichten des Inspektionsbereichs (Z) zu bilden, die in unterschiedlichen Blickwinkeln aufgenommen sind, wobei der Feldwinkel des Objektivs und der Matrixkamera (8) in unterschiedliche Bereiche geteilt ist, wobei jeder Bereich einer Ansicht entspricht,
dass die Mittel (3) zur Drehung es ermöglichen, die vertikale Drehung der Objekte (2) um ihre längliche Symmetrieachse (A) zu gewährleisten, und
dass die Reihe von optischen Elementen (11) zur Ablenkung optische Elemente (11) zur Ablenkung beinhaltet, die auf überlagerte Weise in einer vertikalen Richtung angeordnet sind, um die horizontalen Rissen zu erfassen.

2. Einrichtung nach Anspruch 1, **dadurch gekennzeichnet, dass** die optischen Elemente (11) zur Ablenkung auf beiden Seiten der optischen Sichtachse (V) der Matrixkamera (8) angeordnet sind.

3. Einrichtung nach Anspruch 1 oder 2, **dadurch gekennzeichnet, dass** die optischen Elemente (11) zur Ablenkung auf symmetrische Weise in Bezug auf die optische Sichtachse (V) der Matrixkamera (8) angeordnet sind.

4. Einrichtung nach einem der Ansprüche 1 bis 3, **dadurch gekennzeichnet, dass** die optischen Elemente (11) zur Ablenkung, die auf derselben Seite der optischen Sichtachse (V) der Matrixkamera (8) angeordnet sind, voneinander unterschiedliche optische Ablenkungswinkel aufweisen.

5. Einrichtung nach einem der Ansprüche 1 bis 4, **dadurch gekennzeichnet, dass** die optischen Elemente (11) zur Ablenkung durch Kugellinsen, zylindrische Linsen, Prismen oder durch Spiegel umgesetzt sind.

6. Einrichtung nach Anspruch 5, **dadurch gekennzeichnet, dass** die optischen Elemente (11) zur Ablenkung durch Fresnel-Prismen oder Fresnel-Linsen umgesetzt sind.

7. Einrichtung nach einem der Ansprüche 1 bis 6, **dadurch gekennzeichnet, dass** das Beleuchtungssystem (6) und die optischen Elemente (11) zur Ablenkung auf beiden Seiten des Objekts (2) angeordnet sind.

8. Einrichtung nach Anspruch 1, **dadurch gekennzeichnet, dass** die Einheit (20) zur Analyse und Verarbeitung von Bildern einen Vergleich zwischen den Informationen gewährleistet, die aus aufgenommenen Bildansichten extrahiert werden, um die reflektierten Strahlen der stationären Art von denjenigen der mobilen Art zu unterscheiden, die Fehlern des Objekts (2) entsprechen.

9. Einrichtung nach einem der vorhergehenden Ansprüche, **dadurch gekennzeichnet, dass** die Station zur optischen Inspektion (1) dazu ausgelegt ist, gleichzeitig die horizontalen Rissen und die vertikalen Rissen zu erfassen, und optische Elemente (11) zur Ablenkung, die Seite an Seite in einer horizontalen Richtung angeordnet sind, um die vertikalen Rissen zu erfassen, und optische Elemente (11) zur Ablenkung, die auf überlagerte Weise in einer vertikalen Richtung angeordnet sind, um die horizontalen Rissen zu erfassen, umfasst.

## Claims

1. An installation for controlling transparent or translucent hollow objects (2), including means (3) for rotating the objects and at least one optical inspection station (1) for detecting, as defects, light-reflective cracks that a transparent or translucent hollow object (2) rotated about its axis of symmetry (A) by the rotating means has, the object (2) being a bottle, a jar or a flask having an axis of longitudinal symmetry (A) and made of glass, the optical inspection station (1) comprising:
- a lighting system (6) capable of providing a series of light beams illuminating an inspection area (Z) of the object (2) at different incident angles,
- a matrix camera (8) equipped with an objective (9) producing images of the inspection area (Z) during the rotation of the object (2),
- and a unit for analysing and processing the images taken by the matrix camera (8) in order to detect the presence of reflective defects in the images,
**characterised in that** the optical inspection station (1) includes a series of optical elements (11) for deflecting the rays reflected by the inspection area (Z) in the air, disposed between the inspection area (Z) and the objective (9), so as to form in each image, a series of views of the inspection area (Z) taken from different viewing angles, the angle of field of the objective and of the matrix camera (8) being divided into different areas, each area corresponding to a view,
**in that** the rotating means (3) allow ensuring the rotation of the objects (2) around their vertical axis of longitudinal symmetry (A),
and **in that** the series of deflection optical elements (11) includes deflection optical elements (11) disposed in a superimposed manner in a vertical direction to detect horizontal cracks.

2. The installation according to claim 1, **characterised in that** the optical deflection elements (11) are disposed on either side of the optical viewing axis (V) of the matrix camera (8).

3. The installation according to claim 1 or 2, **characterised in that** the optical deflection elements (11) are disposed symmetrically with respect to the optical viewing axis (V) of the matrix camera (8).

4. The installation according to one of claims 1 to 3, **characterised in that** the optical deflection elements (11) disposed on the same side of the optical viewing axis (V) of the matrix camera (8) have optical deviation angles different from each other.

5. The installation according to one of claims 1 to 4, **characterised in that** the optical deflection elements (11) are formed by spherical lenses, cylindrical lenses, prisms or by mirrors.

6. The installation according to claim 5, **characterised in that** the optical deflection elements (11) are formed by Fresnel prisms or Fresnel lenses.

7. The installation according to one of claims 1 to 6, **characterised in that** the lighting system (6) and the optical deflection elements (11) are disposed on either side of the object (2).

8. The installation according to claim 1, **characterised in that** the unit (20) for analysing and processing images ensures a comparison between the information extracted from the views of the images taken so as to distinguish the reflected beams of a stationary nature from those of a movable nature corresponding to defects in the object (2).

9. The installation according to one of the preceding claims, **characterised in that** the optical inspection station (1) is adapted to detect both horizontal cracks and vertical cracks and includes optical deflection elements (11) disposed side by side in a horizontal direction to detect vertical cracks and optical deflection elements (11) disposed in a superimposed manner in a vertical direction to detect the horizontal cracks.
